# EUROPÄISCHE PATENTSCHRIFT

(11) **EP 2 561 938 B1**
(45) Veröffentlichungstag und Bekanntmachung des Hinweises auf die Patenterteilung: **02.07.2014**
(21) Anmeldenummer: 12005518.1
(22) Anmeldetag: 30.07.2012
(51) Int. Cl.: B21J 5/12, B21K 1/30

(54) **Verfahren zum Herstellen eines Synchronrings**
Method of manufacturing a synchronizing ring
Méthode de fabrication d'une bague de synchronisation

(30) Priorität: 20.08.2011 DE 102011111216
(43) Veröffentlichungstag der Anmeldung: 27.02.2013
(73) Patentinhaber: SONA BLW Präzisionsschmiede GmbH, 42859 Remscheid (DE)
(72) Erfinder: Kempf, Dominik, 81735 München (DE); Schmidtkonz, Wolfgang, 80997 München (DE)
(74) Vertreter: Grättinger Möhring von Poschinger Patentanwälte Partnerschaft

(56) Entgegenhaltungen:
- EP-A1- 0 581 483
- WO-A1-86/00838
- WO-A1-2011/073581
- JP-A- 7 112 234

## Beschreibung

Die Erfindung betrifft ein Verfahren zum Herstellen eines Synchronrings für ein Schaltgetriebe.

Nach einem aus EP 0189447 B1 bekannten Verfahren ist die Herstellung eines Synchronbauteils mit Kurzverzahnung durch Präzisionsschmieden in zwei Arbeitsschritten beschrieben. Dabei werden durch Vorschmieden die Zähne der Kurzverzahnung zunächst mit zur Schlagrichtung parallel verlaufenden Zahnflanken und mit Aufmaß der Zahnhöhe hergestellt. Danach werden die Zähne durch Kaltumformen in einem Kalibriergesenk gestaucht, so dass die Zahnköpfe der Kurzverzahnung eine Dachform, deren Zahnflanken eine Schrägstellung annehmen. Der Stauchvorgang im Kalibriergesenk erfolgt dabei ohne Abstützung der Zahnflanken durch die Gesenkform, so dass das Entnehmen des fertigen Werkstücks aus dem Gesenk problemlos möglich ist.

Demgegenüber liegt der vorliegenden Erfindung die Aufgabe zugrunde, das eingangs erwähnte Verfahren derart zu verbessern, dass die Zahnformgenauigkeit der Kurzverzahnung deutlich gesteigert werden kann, insbesondere hinsichtlich der Ausbildung der Zahnflanken, welche als Kupplungsflächen für eine Schaltverzahnung dienen, sowie hinsichtlich der Dachform der Zahnköpfe zur Verbesserung der Schaltfunktion.

Diese Aufgabe wird durch ein Verfahren gemäß Patentanspruch 1 gelöst.

Das erfindungsgemäße Verfahren umfasst in einem ersten Arbeitsschritt das Umformen eines ringförmigen Rohlings in einem Schmiedegesenk und in einem weiteren Arbeitsschritt das Umformen des geschmiedeten Halbzeugs in einem Kalibriergesenk zur Herstellung des Synchronrings in seiner fertigen Form. Letzteres bedeutet, dass wenigstens der Außenumfang des Synchronrings und die dort vorhandene Kurzverzahnung ohne weitere Nachbearbeitung als Ergebnis der beiden Umformschritte fertiggestellt sind; es versteht sich von selbst, dass der Synchronring in dieser Form noch an seinem Innendurchmesser und auch an seiner den Zahnköpfen der Kurzverzahnung gegenüberliegenden Stirnfläche einer spanenden Bearbeitung unterzogen wird.

Anstelle eines einzigen Kalibrierschlags können auch zwei oder mehrere zur Anwendung kommen, je nach Komplexität der Funktionsflächen des Synchronrings.

Im Rahmen der Erfindung kann anstelle eines ringförmigen Rohlings auch ein plattenförmiger eingesetzt werden, dessen Innenfläche erst im Schmiedegesenk freigestanzt wird.

Die vorliegende Erfindung ermöglicht die präzise Herstellung der Kurzverzahnung im Kalibriergesenk. Das Verfahrensprodukt ist ein durch Präzisionsschmieden mit fertigen Funktionsflächen hergestellter Synchronring, insbesondere was dessen präzise Ausformung der Zahnköpfe und der Zahnflanken der Kurzverzahnung betrifft. Durch das Stauchen der Zahnlängen im Kalibriergesenk und das gleichzeitige Aufweiten des Synchronrings auf dessen Fertigmaß im Kalibriergesenk wird die gewünschte exakte Zahnform der Kurzverzahnung verwirklicht.

Die nach dem Kalibrieren erzielte Formgenauigkeit der Kurzverzahnung beträgt zwischen 0,01 und 0,10 mm, bevorzugt zwischen 0,01 und 0,04 mm, besonders bevorzugt zwischen 0,02 und 0,03 mm.

Diese hohen Genauigkeitswerte werden vorteilhaft durch einen geeigneten Umformgrad erreicht, indem für das Halbzeug des Rohlings nach dem Schmieden ein Aufmaß der Zahnlängen der Kurzverzahnung zwischen 0,1 mm und 0,5 mm über deren Fertigmaß gewählt wird und indem ein Abmaß des Außendurchmessers des Synchronrings zwischen 0,03 mm und 0,3 mm über dessen Fertigmaß gewählt wird.

Durch Versuche konnte nachgewiesen werden, dass durch eine Ausbildung der Kurzverzahnung als Schrägverzahnung sowohl Laufruhe als auch Geräuschentwicklung des in Schaltgetrieben eingesetzten Synchronrings besonders günstig beeinflusst werden können. Ein geeignetes Herstellungsverfahren ist dabei vorteilhaft derart ausgestaltet, dass der teilfertige Synchronring aus dem Schmiedegesenk und der fertiggeformte Synchronring aus dem Kalibriergesenk jeweils mittels eines verdrehbaren Auswerfers nach Abheben des Obergesenks entformt, d.h. aus dem Untergesenk nach oben ausgedreht wird.

Für die Herstellung von Synchronringen üblicherweise geeignete Stähle sind Vergütungsstähle wie z.B. CK45. Dabei beträgt die Schmiedetemperatur ca. 1.200°C. Das Kaltumformen erfolgt bei Umgebungstemperatur, also ca. 20°C, wobei ein gekühltes Kalibriergesenk zweckmäßig ist.

Im Folgenden wird die Herstellung eines Synchronrings an einem Ausführungsbeispiel anhand der Zeichnung näher erläutert. Es zeigt
- Fig. 1: einen Querschnitt durch eine Schmiedegesenk mit eingelegtem Rohling und abhobenem Obergesenk vor dem Schmieden,
- Fig. 2: die perspektivische Ansicht eines Synchronrings als Halbzeug nach dem Schmieden,
- Fig. 3: einen Querschnitt durch ein Kalibriergesenk mit nur teilweise in das Halbzeug eingefahrenem Obergesenk,
- Fig. 4: einen fertigen Synchronring nach dem Kalibrieren,
- Fig. 5: einen Querschnitt gemäß V-V der Fig. 4 durch den Synchronring,
- Fig. 6: eine axiale Teilansicht gemäß VI der Fig. 4 gegen die Zahnköpfe der Kurzverzahnung und
- Fig. 7: eine radiale Teilansicht eines Synchronrings mit schrägverlaufender Kurzverzahnung.

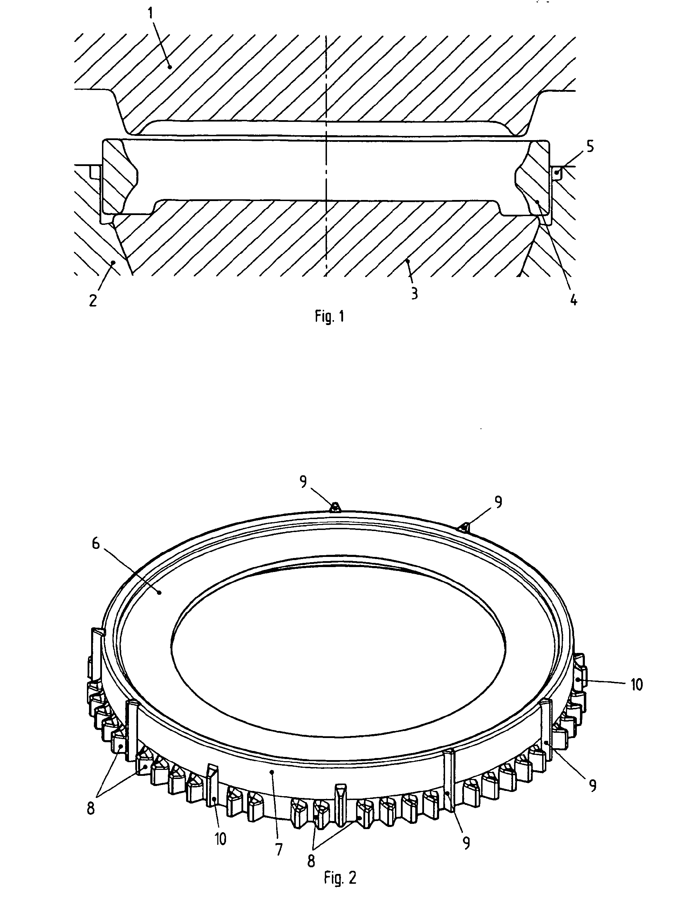

Fig. 1 zeigt ein Schmiedegesenk aus einem Obergesenk 1 und einem Untergesenk, welches ein Ringteil 2 und einen zentralen Auswerfer 3 umfasst. In das Untergesenk ist ein ringförmiger Rohling 4 eingelegt, über welchem das Obergesenk 1 abgehoben ist. Im Ringteil 2 des Untergesenks sind entsprechende Ausnehmungen 5 zum Ausformen einer Kurzverzahnung am Außenumfang des zu schmiedenden Synchronrings vorgesehen.

Der Rohling 4 wird in dem Schmiedegesenk bei einer Schmiedetemperatur von ca. 1.200°C umgeformt, so dass der in Fig. 2 perspektivisch dargestellte Synchronring 6 als Halbzeug geformt wird. Dieser teilfertige Synchronring 6 besitzt eine zylindrische Umfangsfläche 7, von welcher die Zähne 8 der Kurzverzahnung radial vorspringen. Wenige längere Führungszähne 9, 10 mit geringerer Zahnhöhe verglichen mit jener der kurzen Zähne 8 der Kurzverzahnung dienen dem Einschleifen während eines Schaltvorgangs eines (nicht dargestellten) Gangrads, wobei über den Umfang des Synchronrings verteilt sechs lange Zähne 9 und die gleiche Anzahl halblanger Zähne 10 vorgesehen sind. Die Zähne 8 der Kurzverzahnung des Synchronrings 6, ggfs. auch dessen längeren Führungszähne 9, 10 sind mit einem Aufmaß ihrer Zahnlänge geformt. Beim anschließenden Kalibrierschlag werden sie hinsichtlich ihrer Zahnlänge auf deren Endmaß zurückgestaucht, wobei mit diesem Stauchvorgang der besondere Effekt verbunden ist, dass dadurch die zahnbildende Gesenkform des Kalibriergesenks für jeden einzelnen Zahn vollständig ausgefüllt wird. Dieser Effekt wird noch dadurch verbessert, dass der Synchronring 6 als Halbzeug zunächst mit einem Außendurchmesser mit Abmaß geschmiedet wird, d.h. der Außendurchmesser seiner Umfangsfläche 7 ist etwas kleiner als der Außendurchmesser des fertigen Synchronrings.

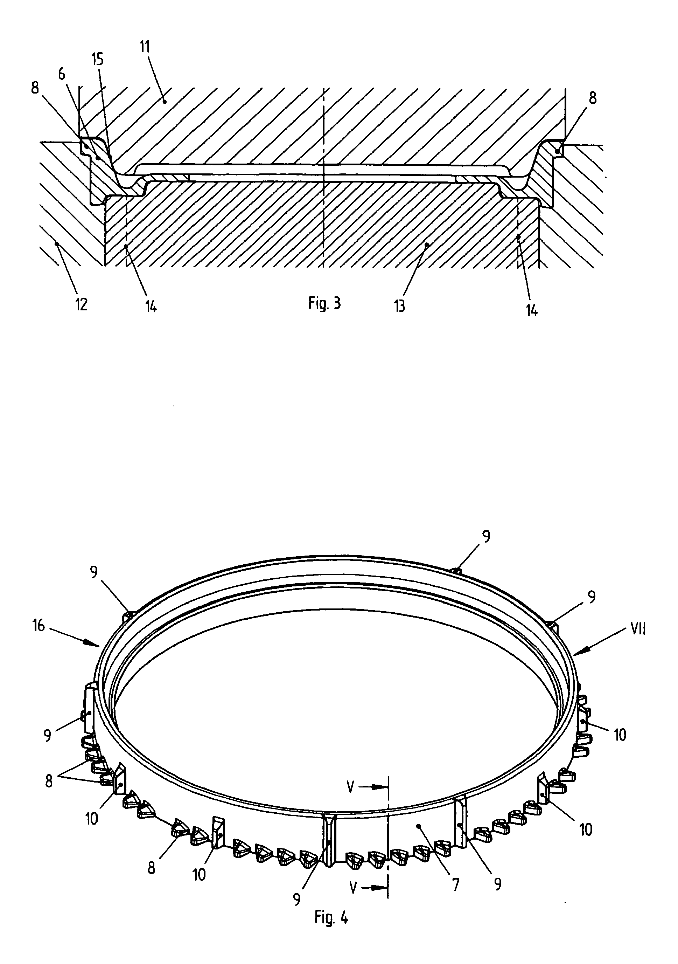

In einem nachfolgenden Umformschritt durch Einlegen des in Fig. 2 gezeigten teilfertigen Synchronring 6 in ein Kalibriergesenk gemäß Fig. 3 wird der Synchronring 6 entsprechend aufgeweitet, so dass sein Außendurchmesser das vorgesehene Endmaß erreicht. Durch dieses Aufweiten im Kalibriergesenk entsteht ein zusätzlicher Werkstoffluß in radialer Richtung nach außen, was wiederum das vollständige Ausfüllen der Gesenkhohlräume im Bereich der Kurzverzahnung sicherstellt.

Fig. 3 zeigt ein Kalibriergesenk mit Obergesenk 11 sowie einem Untergesenk umfassend einen Ringteil 12 und einen Bodenteil 13, der gemäß den strichpunktierten Umrisslinien 14 auch als kegelförmiger Auswerfer gestaltet sein kann. Im Untergesenk 12, 13 des Kalibriergesenks ist der Synchronring 6 als Halbzeug eingelegt. In der gezeigten Schnittdarstellung sind zwei Zähne 8 der Kurzverzahnung dargestellt. Das Obergesenk 11 ist teilweise in das Innere des Synchronrings 6 eingefahren und bewirkt beim Zusammenfahren des Kalibriergesenks durch sein kegelförmiges Formende 15 das Verdrängen des Werkstoffs des als Halbzeugs eingelegten Synchronrings 6 in den Gesenkhohlraum des Untergesenks 12, 13 des Kalibriergesenks 11, 12, 13.

Der Synchronring 16 als Fertigteil ist in perspektivischer Ansicht in Fig. 4 dargestellt. Um seine zylindrische Umfangsfläche 7 sind umlaufend die Zähne 8 der Kurzverzahnung angeordnet. Dazwischen sind die langen und halblangen Führungszähne 9, 10 angeordnet.

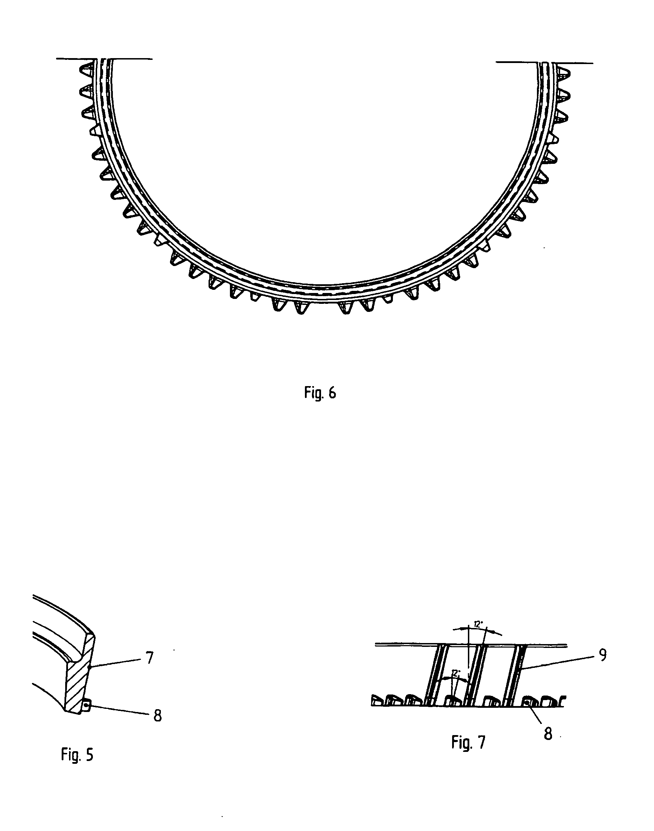

Fig. 5 zeigt einen Querschnitt durch den fertigen Synchronring 16 mit einer Flankenansicht eines Zahnes 8 mit dachförmigem Zahnkopf 17 der Kurzverzahnung. Auf seinem Innenumfang ist der Synchronring 16 noch nicht bearbeitet. Die spätere Innenkontur ist jedoch strichliert eingezeichnet.

Fig. 6 zeigt eine axiale Ansicht auf einen Abschnitt des fertig kalibrierten Synchronrings 16 gemäß VI der Fig. 4. Die Zähne 8 der Kurzverzahnung sind in einer Ansicht auf die dachförmigen Zahnköpfe 17 gezeichnet.

Fig. 7 zeigt ein Detail VII zu Fig. 4, jedoch in einer Variante des Synchronrings mit einer als Schrägverzahnung ausgeführten Kurzverzahnung, deren Zähne mit der Axialrichtung beispielhaft einen Winkel von 12° bilden. Durch diese Schrägstellung ergibt sich eine besonders geräuscharme Wirkungsweise des Synchronrings 16 während der Schaltvorgänge. Es versteht sich von selbst, dass zum Entformen eines Synchronrings mit Schrägverzahnung ein drehbarer Auswerfer erforderlich ist, der gewöhnlich eine kegelige Form wie durch die Umrisslinien 14 in Fig. 3 angedeutet, aufweist.

## Patentansprüche

1. Verfahren zum Herstellen eines Synchronrings (6) für ein Schaltgetriebe, welcher eine Kurzverzahnung an seinem Außenumfang (7) aufweist, durch Warmumformen und nachfolgendes Kaltkalibrieren ohne weitere Nachbearbeitung des Außenumfangs und der Kurzverzahnung, umfassend die Verfahrensschritte
dass ein ringförmiger Rohling (4) in einem Schmiedegesenk unter Ausbildung der Kurzverzahnung zu einem teilfertigen Synchronring (6) umgeformt wird,
wobei die Zähne (8) der Kurzverzahnung mit Aufmaß ihrer axialen Zahnlängen geschmiedet werden und der Außendurchmesser des Synchronrings (6) mit Abmaß geschmiedet wird und
dass der teilfertige Synchronring (6) in einem Kalibriergesenk fertiggeformt wird, derart, dass die axialen Zahnlängen der Kurzverzahnung durch Stauchen und der Außendurchmesser des Synchronrings (6) durch Aufweiten auf ihr jeweiliges Fertigmaß kalibriert werden.

2. Verfahren nach Anspruch 1, wobei die Kurzverzahnung als Schrägverzahnung ausgebildet ist,
**dadurch gekennzeichnet,**
**dass** der teilfertige Synchronring (6) aus dem Schmiedegesenk und der fertiggeformte Synchronring (16) aus dem Kalibriergesenk jeweils mittels eines verdrehbaren Auswerfers nach Abheben des Obergesenks (1, 11) entformt wird.

3. Verfahren nach Anspruch 1,
**dadurch gekennzeichnet,**
**dass** die Zähne der Kurzverzahnung nach dem Kalibrieren mit einer Formgenauigkeit zwischen 0,01 und 0,10 mm, bevorzugt zwischen 0,01 und 0,04 mm, besonders bevorzugt zwischen 0,02 und 0,03 mm hergestellt werden.

4. Verfahren nach Anspruch 1,
**dadurch gekennzeichnet,**
**dass** ein Aufmaß der Zahnlängen der Kurzverzahnung zwischen 0,1 mm und 0,5 mm über deren Fertigmaß gewählt wird.

5. Verfahren nach Anspruch 1,
**dadurch gekennzeichnet,**
**dass** ein Abmaß des Außendurchmessers des teilfertigen Synchronrings (6) zwischen 0,03 mm und 0,3 mm über dessen Fertigmaß gewählt wird.

## Claims

1. A method for producing a synchronizer ring (6) for a manual transmission, which comprises a short toothing on its outer circumference (7), through hot forming and subsequent cold calibrating without further reworking of the outer circumference and of the short toothing, comprising the method steps
that an annular blank (4) is formed in a forging swage subject to forming the short toothing into a part-finished synchronizer ring (6),
wherein the teeth (8) of the short toothing are forged with oversize of their axial tooth lengths and the outer diameter of the synchronizer ring (6) is forged with undersize and
that the partly finished synchronizer ring (6) is finish-formed in a calibrating swage in such a manner that the axial tooth lengths of the short toothing and the outer diameter of the synchronizer ring (6) are calibrated to their respective finished dimension by upsetting and by expanding respectively.

2. The method according to Claim 1, wherein the short toothing is formed as helical toothing,
**characterized in that**
the partly finished synchronizer ring (6) is demoulded from the forging swage and the finish-formed synchronizer ring (16) from the calibrating swage in each case by means of a twistable ejector following the lifting-off of the upper swage (1, 11).

3. The method according to Claim 1,
**characterized in that** the teeth of the short toothing following the calibrating are produced with a dimensional accuracy between 0.01 and 0.10 mm, preferably between 0.01 and 0.04 mm, most preferably between 0.02 and 0.03 mm.

4. The method according to Claim 1,
**characterized in that**
an oversize of the tooth lengths of the short toothing is selected between 0.1 mm and 0.5 mm over their finished dimension.

5. The method according to Claim 1,
**characterized in that**
an undersize of the outer diameter of the partly finished synchronizer ring (6) between 0.03 mm and 0.3 mm over its finished dimension is selected.

## Revendications

1. Procédé pour la fabrication d'une bague de synchronisation (6) pour une boîte de vitesse, laquelle présente une denture basse sur sa circonférence extérieure (7), par formage à chaud suivi d'un calibrage à froid sans autre post-traitement de la circonférence extérieure et de la denture basse, comprenant les étapes du procédé
en ce qu'une pièce d'ébauche (4) annulaire est transformée dans une matrice de forgeage en formant la denture basse pour donner une bague de synchronisation (6) semi-finie,
les dents (8) de la denture basse étant forgées avec une surépaisseur de leur longueurs de dent axiales et le diamètre extérieur de la bague de synchronisation (6) étant forgé avec une tolérance, et
en ce que la bague de synchronisation (6) semi-finie est finie dans une matrice de calibrage de manière à calibrer respectivement à leur dimension finale les longueurs de dent axiales de la denture basse grâce à un refoulement et le diamètre extérieur de la bague de synchronisation (6) grâce à un élargissement.

2. Procédé selon la revendication 1, dans lequel la denture basse est réalisée en tant que denture hélicoïdale,
**caractérisé en ce que**
l'on démoule respectivement la bague de synchronisation (6) semi-finie de la matrice de forgeage et la bague de synchronisation (16) finie de la matrice de calibrage à l'aide d'un éjecteur pouvant être soumis à une torsion après le soulèvement de la matrice supérieure (1, 11).

3. Procédé selon la revendication 1,
**caractérisé en ce qu'**
après le calibrage, les dents de la denture basse sont fabriquées avec une précision de forme comprise entre 0,01 et 0,10 mm, de préférence entre 0,01 et 0,04 mm, de manière particulièrement préférée entre 0,02 et 0,03 mm.

4. Procédé selon la revendication 1,
**caractérisé en ce qu'**
une surépaisseur des longueurs de dent de la denture basse est choisie de manière à être supérieure de l'ordre de 0,1 mm à 0,5 mm à la dimension finale de celles-ci.

5. Procédé selon la revendication 1,
**caractérisé en ce qu'**
une tolérance du diamètre extérieur de la bague de synchronisation (6) semi-finie est choisie de manière à être supérieure de l'ordre de 0,03 mm à 0,3 mm à la dimension finale de celui-ci.
